# EUROPÄISCHE PATENTANMELDUNG

(11) **EP 3 446 765 A1**
(43) Veröffentlichungstag der Anmeldung: **27.02.2019**
(21) Anmeldenummer: 17188090.9
(22) Anmeldetag: 28.08.2017
(51) Int. Cl.: B01D 29/01, B01D 29/11, B01D 29/21, B01D 29/58

(54) **FILTEREINHEIT, FILTERSYSTEM UND VERFAHREN ZUM HERSTELLEN EINER FILTEREINHEIT**

(30) Priorität: 24.08.2017 EP 17187752
(71) Anmelder: Novamem AG, 8952 Schlieren (CH)
(72) Erfinder: Loepfe, Michael, 8006 Zürich (CH); Kellenberger, Christoph Ruedi, 8005 Zürich (CH)
(74) Vertreter: Hepp Wenger Ryffel AG

(57) **Zusammenfassung**

Die Erfindung betrifft eine Filtereinheit (1) für ein Fluid. Die Filtereinheit (1) enthält einen Filter (2) und mindestens zwei Dichtungselemente (3, 4). Der Filter weist eine Einflussfläche (5), eine Ausflussfläche (6) und zumindest eine Verbindungsfläche (7) auf. Die Verbindungsfläche (7) erstreckt sich zwischen der Einflussfläche (5) und der Ausflussfläche (6). An der Einflussfläche (5) ist das erste Dichtungselement (3) angeordnet. An der Ausflussfläche (6) oder der Verbindungsfläche (7) ist das zweite Dichtungselement (4) angeordnet. Das erste Dichtungselement (3) umschliesst einen Rand (12) der Einflussfläche (5). Das zweite Dichtungselement (4) umschliesst einen Rand (13) der Ausflussfläche (6) oder der Verbindungsfläche (7). Das erste Dichtungselement (3) und das zweite Dichtungselement (4) weisen jeweils ein Dichtungsprofil (8, 9) auf. Das zweite Dichtungsprofil (9) unterscheidet sich vom ersten Dichtungsprofil (8).

## Beschreibung

Die vorliegende Erfindung betrifft eine Filtereinheit, ein Filtersystem und ein Verfahren zum Herstellen einer Filtereinheit gemäss den Oberbegriffen der unabhängigen Ansprüche.

Ein Anwendungsgebiet der Filtereinheit ist die Filtrierung von Leitungswasser. Dabei wird ein Filtersystem mit einer Filtereinheit an das Ende einer Leitung, wie beispielsweise einem Wasserhahn montiert, um das Wasser zu reinigen. Dabei können grobkörnige Bestandteile, organische Bestandteile, Bakterien, Viren, Schwermetalle oder Ionen aus dem Leitungswasser entfernt werden.

Bekannte Wasserfilter verwenden Membranen oder Kies, Stein, Kunststoff, Metall oder Sandfilter um partikulierte Inhaltsstoffe im Wasser abzutrennen. Weiterhin sind Filtereinheiten mit Schichten zur Absorption mittels Aktivkohle bekannt.

Bei der Filtereinheit muss sichergestellt werden, dass das Wasser aus der Leitung durch Filterelemente geleitet wird und nicht an diesen vorbeifliesst, da ansonsten die Reinigungswirkung ungenügend sein kann. Dafür weisen die Filtereinheiten Dichtungen auf.

US 2015/0048022 A1 zeigt eine O-Ringdichtung, welche für Gasfiltration ausgelegt wurde. Die O-Ringdichtung hält einen runden Gitterfilter. Zusätzlich enthält die O-Ringdichtung einen inneren Teil, welcher sich radial nach innen erstreckt. Die O-Ringdichtung wird um den Gitterfilter gespritzt, wodurch der Gitterfilter gehalten wird. Der innere Teil soll Beschädigungen am O-Ring verhindern. Durch den inneren Teil wird eine Fläche, in der filtriert werden kann, verringert.

Eine weitere Filtereinheit ist in US 6,779,669 B2 gezeigt. Das Dokument zeigt ein Filtermodul, das durch einen thermoplastischen Umspritzungsprozess hergestellt wird. Dadurch soll eine robustere Filtereinheit hergestellt werden. Das Dokument hat den Nachteil, dass bei grossen Druckdifferenzen zwischen Einlass und Auslass das Filterelement undicht werden kann.

Es ist daher die Aufgabe der Erfindung, die Nachteile des Standes der Technik zu überwinden. Insbesondere soll eine Filtereinheit, ein Filtersystem und ein Verfahren zur Verfügung gestellt werden, welche zuverlässig bei hohen Druckdifferenzen zwischen Einlass und Auslass abdichten.

Ein erster Aspekt der Erfindung betrifft eine Filtereinheit für ein Fluid. Das Fluid ist bevorzugt eine Flüssigkeit und besonders bevorzugt Wasser. Die Filtereinheit enthält einen Filter und mindestens zwei Dichtungselemente. Der Filter weist eine Einflussfläche, eine Ausflussfläche und zumindest eine Verbindungsfläche auf. Die Verbindungsfläche erstreckt sich zwischen der Einflussfläche und der Ausflussfläche. An der Einflussfläche ist das erste Dichtungselement angeordnet. An der Ausflussfläche oder der Verbindungsfläche ist das zweite Dichtungselement angeordnet. Das erste Dichtungselement umschliesst einen Rand der Einflussfläche. Das zweite Dichtungselement umschliesst einen Rand der Ausflussfläche oder der Verbindungsfläche. Das erste Dichtungselement und das zweite Dichtungselement weisen jeweils ein Dichtungsprofil auf. Das zweite Dichtungsprofil unterscheidet sich vom ersten Dichtungsprofil.

Eine solche Anordnung hat den Vorteil, dass sie an die unterschiedlichen Druckverhältnisse auf Einflussseite und Ausflussseite angepasst werden kann. Typischerweise fällt ein Druck von der Einflussseite zu der Ausflussseite ab. Bei Wasserfiltern kann dieser Druckverlust beispielsweise 2-3 bar betragen. Infolge des Druckverlustes wird die Filtereinheit in Richtung eines Flusses des Fluides gedrückt. Folglich wird eine Dichtung auf der Ausflussseite durch den Fluiddruck gegen eine Gegenfläche gedrückt, während auf einer Einflussseite Dichtung von einer zweiten Gegenfläche durch das Fluid weggedrückt wird. Durch die unterschiedlichen Dichtungsprofile kann dieser Unterschied kompensiert werden, ohne dass eine Vorspannung erhöht werden muss. Folglich kann eine Filtereinheit auch ohne Werkzeuge oder Maschinen montiert werden und gleichzeitig eine dichte Dichtung aufweisen.

Dichtungsprofil bezieht sich auf die Form eines Querschnittes des jeweiligen Dichtungselementes. Insbesondere bezieht sich Dichtungsprofil die Form eines Querschnittes entlang einer Ein- oder Ausflussebene. In einer alternativen Ausführungsform kann die Filtereinheit zumindest drei Dichtungselemente enthalten. Das dritte Dichtungselement kann die Verbindungsfläche, bevorzugt vollständig, bedecken.

In einer Ausführungsform kann die Filtereinheit zwei oder mehr Verbindungsflächen aufweisen, welche sich zwischen der Einflussfläche und der Ausflussfläche erstrecken. In einer bevorzugten Ausführungsform ist das erste Dichtungsprofil flach und das zweite Dichtungsprofil rundlich.

In einer bevorzugten Ausführungsform umschliessen die Dichtelemente die Verbindungsfläche. Weiter bevorzugt können die Dichtelemente einen oder zwei oder mehr Flansche aufweisen welche sich jeweils auf der Einflussfläche und/oder der Ausflussfläche erstrecken. Dadurch kann der Filter stabil gehalten werden.

In einer weiteren Ausführungsform ist die Dichtung U-förmig und umfasst die Verbindungsfläche. Besonders bevorzugt weisen die Dichtelemente eine Vertiefung auf, welche komplementär zu einem Rand des Filters ist.

In einer bevorzugten Ausführungsform sind die Dichtelemente um den jeweiligen Rand als Umspritzung ausgeführt. Dadurch können die Dichtungselemente mit dem Filter verbunden werden. Ausserdem wird dadurch eine einfache Montage ermöglicht. Insbesondere können dadurch mehrere Filterschichten zusammengehalten werden.

In einer bevorzugten Ausführungsform ist das erste Dichtungsprofil so geformt, dass ein lateraler Druck des Fluides das erste Dichtungsprofil gegen eine Anschlagfläche drückt. Die Anschlagfläche ist zu einer Einflussrichtung des Fluides parallel. Dadurch kann eine Dichtwirkung verbessert werden.

In einer bevorzugten Ausführungsform ist das zweite Dichtungsprofil in Richtung der Ausflussrichtung bei gleichen Druckverhältnissen stärker verformbar als das erste Dichtungsprofil in Richtung der Einflussrichtung. Das zweite Dichtungsprofil kann durch seine Kontur und oder durch sein Material stärker verformbar sein. Dadurch kann das zweite Dichtungsprofil sich bei höheren Anpressdrücken besser an eine Gegenkontur anpassen.

In einer Ausführungsform erstrecken sich die Dichtprofile von einer Ebene entlang der Einlass- und/oder Auslassfläche jeweils entlang der Einflussrichtung bzw. der Ausflussrichtung.

Bevorzugt sind die Dichtungselemente für Druckbereiche von 0-10 bar, insbesondere von 0-8 bar, besonders bevorzugt von 0-6 bar geeignet.

In einer bevorzugten Ausführungsform weist das erste Dichtungsprofil in einem Druckbereich von 0-6 bar bei gleichem Anpressdruck und bei einer bevorzugt als Nut ausgebildeten Gegenfläche eine höhere Dichtfläche als das zweite Dichtungsprofil auf.

In einer bevorzugten Ausführungsform ist das erste Dichtungsprofil ein Flachdichtungsprofil, ein Lippendichtungsprofil, ein Doppellippendichtungsprofil, ein Labyrinthdichtungsprofil oder ein Deltadichtungsprofil.

In einer bevorzugten Ausführungsform ist das zweite Dichtungsprofil eine O-Ring Dichtungsprofil, ein X-Ring Dichtungsprofil, ein dornartiges Dichtungsprofil, ein Schlauchdichtungsprofil, besonders bevorzugt mit Nut, oder eine faserverstärkte Dichtung.

Dichtungsprofil kann im Kontext der vorliegenden Anmeldung als Teilprofil verstanden werden. Insbesondere kann Dichtungsprofil als eine Hälfte verstanden werden. So ist beispielsweise das O-Ring Dichtungsprofil ein halbkreisförmiges Ende eines Dichtungselements. Analog dazu ist ein flaches Dichtungsprofil ein rechteckiges Endprofil mit einer flachen Endfläche. Ein X-Ring Dichtungsprofil als weiteres Beispiel kann in einer Ausführungsform nur eine Hälfte eines X Rings enthalten und könnte dann im Rahmen dieser Anmeldung auch als V Profil bezeichnet werden.

In einer bevorzugten Ausführungsform ist der Filter ein Mehrschichtfilter. Besonders bevorzugt weist der Filter zwei, drei, vier, fünf, sechs, sieben, acht oder mehr Schichten auf. Je mehr Schichten der Filter aufweist, desto höher ist ein Druckabfall des Fluides durch den Filter. Folglich sind die oben genannten Dichtungselemente besonders geeignet für mehrschichtige Filter.

Dabei können die Schichten ein oder mehrere Elemente der folgenden Liste enthalten: Aktivkohleschicht, Membran für Bakterien und Virenfiltration, Schwermetallfilterschicht, eine Ionentauscherschicht, eine Geschmacksaroma abgebende Schicht, eine Vorfilterschicht, eine Zwischenfilterschicht und Endfilterschicht.

Einzelne oder mehrere Schichten, insbesondere Filterschichten können dabei mehrfach vorkommen.
Ein Beispiel für eine Membran für die Bakterienfiltration ist in EP 2 476 724 A1 beschrieben.

Die Vorfilterschicht kann aus einem gewebten Stoff oder einem Vliesstoff bestehen. Weiterhin kann die Vorfilterschicht ein Glasfilter, ein Metallgitter oder ein Kunststoffgitter sein. Eine Zwischenfilterschicht oder eine Endfilterschicht kann die gleichen Eigenschaften aufweisen.

Die Ionentauscherschicht enthält Materialien zur Anreicherung oder Entmineralisierung. So können beispielsweise Kalziumionen aus dem Wasser gefiltert werden.

Die Schwermetallschicht kann ein Medium zur Reduktion von Schwermetall und/oder radioaktiven Substanzen enthalten.

In einer bevorzugten Ausführungsform sind die Schichten des Filters durch die Dichtungselemente und/oder über die Verbindungsfläche miteinander verbunden. Besonders bevorzugt ist jede Schicht durch zumindest eines der Dichtungselemente gegen jeweils benachbarte Schichten abgedichtet. Dadurch wird verhindert, dass das Fluid zwischen zwei Schichten seitlich aus der Filtereinheit ausfliest. Besonders bevorzugt wird zwischen den Schichten durch die Dichtungselemente abgedichtet.

In einer bevorzugten Ausführungsform weist der Filter eine Dicke von mehr als 0,5 mm, besonders bevorzugt mehr als 3 mm, ganz besonders bevorzugt mehr als 4 mm, auf. Weiter bevorzugt weist der Filter eine kleinere Dicke als 20 mm, besonders bevorzugt kleiner als 15 mm und ganz besonders bevorzugt kleiner als 12 mm oder 10 mm auf. Dadurch lässt sich der Filter auf ein Ende einer Leitung, wie zum Beispiel einen Wasserhahn, schrauben.

In einer bevorzugten Ausführungsform ist der Filter ein Flachfilter oder ein Zylinderfilter oder ein Spiralwickelfilter.

Ein Spiralwickelfilter wird hergestellt, indem eine Filterschicht aufgerollt wird. Dadurch entsteht eine größere Oberfläche, durch die das Fluid fliessen kann.

In einer bevorzugten Ausführungsform bedecken die Dichtungselemente die Verbindungsfläche des Filters zumindest teilweise. In einer besonders bevorzugten Ausführungsform bedecken die Dichtungselemente die Verbindungsfläche des Filters vollständig. Dadurch wird verhindert, dass das Fluid seitlich aus der Filtereinheit austritt.

In einer Ausführungsform können das erste und das zweite Dichtungselement einen zusammenhängenden Körper ausbilden. In einer alternativen Ausführungsform kann die Filtereinheit ein drittes Dichtelement enthalten, welches auf der Verbindungsfläche angeordnet ist. Die Dichtelemente können untereinander abgedichtet sein.

In einer bevorzugten Ausführungsform sind das erste und das zweite Dichtungselement jeweils oder gemeinsam einstückig ausgebildet. Das erste Dichtungselement kann zweiteilig ausgeführt sein. Das zweite Dichtungselement kann mit nur einem Teil des ersten Dichtungselementes einstückig ausgebildet sein. Dadurch können die Dichtungselemente einfach hergestellt werden. Weiterhin können die Dichtungselemente dadurch in wenigen Produktionsschritten hergestellt und mit dem Filter verbunden werden. Ein weiterer Vorteil der einstückig ausgebildeten Dichtungselemente ist, dass das Filterelement stabiler ist.

In einer bevorzugten Ausführungsform enthalten die Dichtungselemente ein Elastomer oder bestehen aus einem Elastomer. Elastomere sind vorteilhaft, da sie dicht gegenüber Fluiden insbesondere Flüssigkeiten, bevorzugt Wasser, sind. Weiterhin sind die Elastomere komprimierbar, wodurch eine hohe Dichtwirkung erzielt werden kann. Besonders bevorzugt ist das Elastomer lebensmittelverträglich. Dadurch kann das Filterelement für Lebensmittel, insbesondere Wasser für den Haushalt, eingesetzt werden.

In einer bevorzugten Ausführungsform ist das Elastomer ein Silikon oder ein Polyurethan. Alternativ kann das Elastomer auch Styrolbutadien (SBR), Butadien-Acrylonitirl-Kautscnuk (NBR) oder Fluorokautschuk (FKM) sein. Die Dichtelemente können aus verschiedenen Materialien sein oder verschiedene Materialien enthalten. Bevorzugt bestehen die Dichtelemente aus demselben Material.

In bestimmen Ausführungsformen kann das Elastomer ein fluoriertes oder fluorfreies Silikon-Kautschuk sein. Beispiele sind Vinylmethylsilikonkautschuk (MVQ), Vinylsilikonkautschuk (VQ), Methylsilikonkautschuk (MQ), fluorierter Vinylmethylsilikonkautschuk (MFVQ). Silikon-Kautschuk ist beispielweise unter den Handelsnamen Silopren, Silastic, SE, Blensil oder Silicone bekannt.

In einer bevorzugten Ausführungsform ist Elastomer ein quellendes Material, welches in wässrigen Medien stark quellt. Besonders bevorzugt können die Dichtungselemente ein Superabsorbermaterial enthalten oder aus einem Superabsorbermaterial bestehen. Bevorzugt enthält das Superabsorbermaterial Acrylsäure, besonders bevorzugt ein Copolymer aus Acrylsäure und Natriumacrylat.

Beispiele sind unter den Handelsnamen HySorb (BASF), SAVIVA (BASF) und FAVOR (Evonik) bekannt.

In einer bevorzugten Ausführungsform ist die Dichtung durch ein Spritzgussverfahren hergestellt. Dadurch kann die Dichtung günstig und schnell hergestellt werden.

In einer bevorzugten Ausführungsform weist das Elastomer eine Shorehärte A von 20 bis 90 auf. Besonders bevorzugt weist das Elastomere eine Shorehärte A von 40 bis 80 auf. Weiter bevorzugt weist das Elastomer eine Shorehärte von 35 bis 70 auf. In einer weiteren Ausführungsform kann die Shorehärte A 40 bis 60 betragen. Dadurch können die Dichtungselemente komprimiert werden. Insbesondere das zweite Dichtungselement kann durch die Verformung eine höhere Dichtfläche erreichen. Die besonders bevorzugten Härten sind an die Druckverhältnisse von Leitungswasser angepasst.

In einer bevorzugten Ausführungsform enthält der Filter eine Aktivkohleschicht. Dadurch können durch Absorption organische Stoffe wie Geruchs-, Farb- und Geschmacksstoffe, sowie eine Vielzahl von Kohlenwasserstoffen gefiltert werden. Außerdem kann die Aktivkohle Chlor filtern. Besonders vorteilhaft ist die Aktivkohleschicht in Kombination mit einem Giessen, insbesondere Spritzgiessen. Die Dichtelemente können während dem Giessen in Poren an einem seitlichen Rand der Aktivkohleschicht eindringen und dadurch eine Seite des Filters besonders gut abdichten.

In einer bevorzugten Ausführungsform ist der Filter und/oder die Dichtungselemente im Wesentlichen ringförmig, scheibenförmig und/oder zylindrisch. Dadurch kann die Filtereinheit gleichmässig über die Einfluss und Ausflussfläche belastet werden.

In einer bevorzugten Ausführungsform sind am ersten und/oder am zweiten Dichtungselement und/oder an der Mantelfläche und/oder an einer Mantelfläche eine oder mehrere Ausnehmungen und/oder Nocken angeordnet. Die Ausnehmungen oder Nocken erstrecken sich bevorzugt in radialer Richtung von der Filtereinheit. Besonders bevorzugt erstrecken sich die Nocken und/oder Ausnehmungen senkrecht zur Ausfluss- oder Einflussrichtung. Die Filtereinheit kann eine, zwei, drei, vier, fünf oder mehr Nocken und/oder Ausnehmungen aufweisen. Die Nocken und/oder Ausnehmungen sind bevorzugt gleichmässig in Umfangsrichtung angeordnet. Die Umfangsrichtung ist senkrecht zur Ein- oder Ausflussrichtung. In einer Ausführungsform sind die Nocken und/oder Ausnehmungen an einem Ende der Filtereinheit in Einflussrichtung der Filtereinheit angeordnet. In einer Ausführungsform sind die Nocken und/oder Ausnehmungen an einem Ende der Filtereinheit in Ausflussrichtung angeordnet.

Beim Befestigen der Filtereinheiten kann ein oder mehrere Dichtungselemente durch das Festziehen verdreht werden, sodass Teile des Materials der Dichtungselemente nicht vollständig dichten. Insbesondere kann ein Verdrehen der Dichtung, wie bei der Bajonett- oder Gewindebefestigung dazu führen, dass sich Wellen entlang des Dichtelementes formen. Diese Wellen würden dann ein Ablösen von der Dichtfläche und somit Undichtigkeit bedeuten. Durch die Nocken und/oder Ausnehmungen wird verhindert, dass die Dichtungselemente sich beim Montieren verdrehen. So wird eine Verdrehsicherung der Dichtelemente sichergestellt.

Ein weiterer Aspekt der Erfindung betrifft ein Filtersystem. Das Filtersystem enthält eine Filtereinheit wie im Vorhergehenden beschrieben. Ausserdem enthält es eine Haltevorrichtung, welche ein Einflussteil und ein Ausflussteil umfasst. Der Einflussteil und/oder der Ausflussteil weist zumindest eine zur vorgesehenen Einflussrichtung senkrecht oder parallel verlaufende Fläche auf. Die Fläche enthält eine Einflussnut für das erste Dichtungsprofil. Die Einflussnut ist bevorzugt formkomplementär zum ersten Dichtungsprofil ausgebildet. Der Ausflussteil umfasst eine zur Ausflussrichtung senkrecht verlaufende Fläche. Die Fläche umfasst eine insbesondere umlaufende Ausflussnut für das zweite Dichtungsprofil. Der Einflussteil und der Ausflussteil sind durch eine lösbare mechanische Verbindung verbindbar. Die lösbare mechanische Verbindung ist bevorzugt ein Gewinde oder ein Bajonettverschluss. Der Einflussteil und Ausflussteil sind so verbindbar, dass zumindest eines der Dichtungselemente von den Nuten axial vorgepresst wird. Dadurch kann die Filtereinheit gehalten werden und gegenüber der Umwelt abgedichtet werden.

Bevorzugt ist das Filtersystem mit einem Wasserhahn verbindbar. Dadurch kann Leitungswasser gereinigt werden. Weiter bevorzugt wird zumindest die Einflussnut mit dem ersten Dichtelement verpresst.

In einer bevorzugten Ausführungsform umfasst der Einflussteil und/oder der Ausflussteil eine oder mehrere Ausnehmungen und/oder Nocken für entsprechende Ausnehmungen und/oder Nocken der Filtereinheit. Dadurch kann eine Schlupfsicherung realisiert werden.

Die Nocken und/oder Ausnehmungen der Filtereinheit sind bevorzugt so ausgebildet und angeordnet, dass sie in die entsprechenden bevorzugt formkomplementäre Ausnehmungen und/oder Nocken eine Haltevorrichtung für die Filtereinheit eingreifen. Die Nocken und/oder Ausnehmungen der Haltevorrichtung können gleichmässig in Umfangsrichtung verteilt sein. Die Nocken und/oder Ausnehmungen der Haltevorrichtung erstrecken sich bevorzugt in einer Richtung senkrecht zur Ein- und oder Ausflussrichtung, besonders bevorzugt in einer radialen Richtung der Filtereinheit, wobei sich eine Längsachse bevorzugt entlang der Ausflussrichtung erstreckt.

Ein weiterer Aspekt der Erfindung betrifft ein Verfahren zum Herstellen einer Filtereinheit. Die Filtereinheit ist bevorzugt wie oben beschrieben. Das Verfahren enthält die Schritte:
- Bereitstellen eines Filters, bevorzugt eines Mehrschichtfilters, mit einer Einflussfläche, einer Ausflussfläche und zumindest einer Verbindungsfläche, welche sich zwischen Ein- und Ausflussfläche erstreckt,
- Giessen, bevorzugt spritzgiessen, einer Dichtung um die Verbindungsfläche des Filters, wobei die Dichtung an der Einflussfläche ein erstes Dichtungselement mit einem ersten Dichtungsprofil und an der Ausflussfläche ein zweites Dichtungselement mit einem zweiten Dichtungsprofil aufweist, wobei das zweite Dichtungsprofil vom ersten Dichtungsprofil verschieden ist.

Dadurch kann eine Filtereinheit einfach und kostengünstig mit einer Dichtung versehen werden. Zudem kann eine Filtereinheit zuverlässig abgedichtet werden.

Anhand von Figuren, welche lediglich Ausführungsbeispiele darstellen, wird die Erfindung im Folgenden näher erläutert. Es zeigen schematisch:
- Figur 1:: eine perspektivische Ansicht einer ersten Ausführungsform einer Filtereinheit,
- Figur 2:: einen Querschnitt der ersten Ausführungsform der Filtereinheit,
- Figur 3:: eine Detailansicht des Querschnittes aus Figur 2,
- Figur 4:: eine perspektivische Ansicht eines Filtersystems,
- Figur 5:: eine Querschnittsansicht des Filtersystems aus Figur 4 mit einer Filtereinheit gemäss der ersten Ausführungsform
- Figuren 6A und 6B:: einen zweiten Querschnitt und einen dritten Querschnitt der ersten Ausführungsform der Filtereinheit mit einer Schlupfsicherung,
- Figur 7:: eine perspektivische Ansicht einer zweiten Ausführungsform der Filtereinheit,
- Figur 8:: eine erste Querschnittsansicht der zweiten Ausführungsform der Filtereinheit,
- Figur 9:: eine zweite Querschnittsansicht der zweiten Ausführungsform der Filtereinheit,
- Figuren 10A bis 10J:: Querschnittsansichten eines ersten und oder zweiten Dichtungselementes und
- Figuren 11A bis 11E:: verschiedene Filter für eine Filtereinheit gemäß der ersten oder zweiten Ausführungsform.

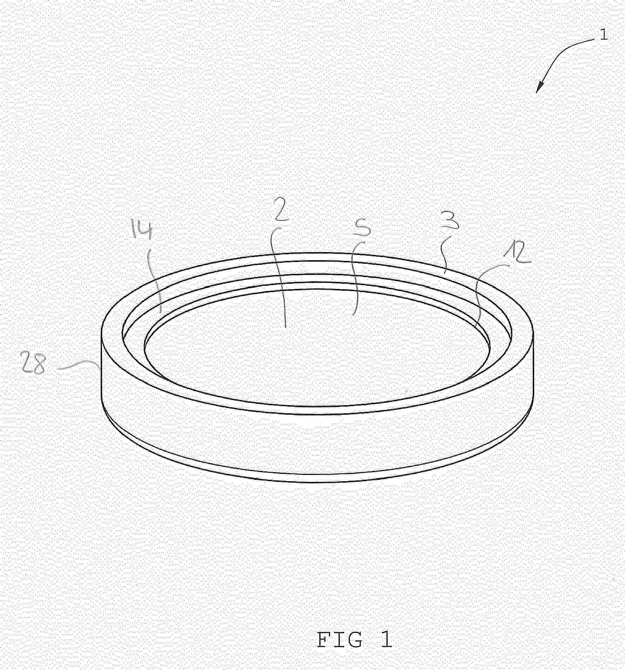

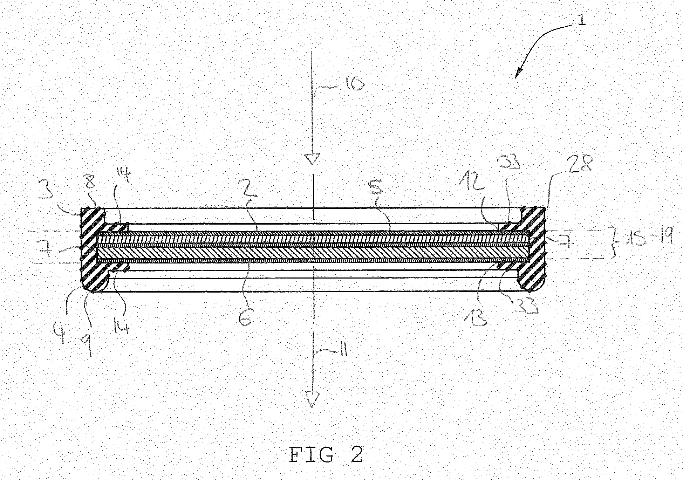

Figur 1 zeigt eine perspektivische Ansicht einer ersten Ausführungsform einer Filtereinheit 1. Die Filtereinheit 1 umfasst einen Filter 2 und eine Dichtung 28 mit einem ersten Dichtungselement 3 und einem zweiten Dichtungselement 4 (siehe Figur 2). Die Filtereinheit 1 umfasst eine Einflussfläche 5 und eine Ausflussfläche 6 (siehe Figur 2). Die Einflussfläche 5 hat einen Rand 12. Am Rand 12 ist zum einen eine Fassung 14 für den Filter 2 angeordnet und zum anderen ist das erste Dichtungselement 3 auf der Seite Einflussfläche 5 angeordnet.

Figur 2 zeigt einen Querschnitt der ersten Ausführungsform der Filtereinheit 1. In dem Querschnitt sind der Filter 2 und die Dichtungselemente 3, 4 im Detail zu sehen. Ein Fluid fliesst in den Filter 2 hinein durch die Einflussfläche 5 in Richtung einer Einflussrichtung 10 und verlässt den Filter an der Ausflussfläche 6 in Richtung einer Ausflussrichtung 11. Der Filter 2 ist ein mehrschichtiger Filter 2 mit fünf Schichten 15-19. Dabei fliesst das Wasser durch den Filter 2 und wird durch Filterschichten 15-19 gereinigt. Die Filterschichten 15-19 werden zusammengehalten durch die ringförmige Dichtung 28. Dafür weist die Dichtung 28 eine Fassung 14 mit zwei Flanschen 33 auf. Die Fassung 14 umschliesst den Filter 2 seitlich und hält die Filterschichten 15-19 am Rand 12 der Einflussfläche 5 zusammen. Der Filter 2 umfasst neben der Einflussfläche 5 und der Ausflussfläche 6 eine Verbindungsfläche 7. Die Verbindungsfläche 7 erstreckt sich zwischen der Einflussfläche 5 und der Ausflussfläche 6. Der Filter 2 ist scheibenförmig ausgebildet und flach. Die Verbindungsfläche 7 erstreckt sich ringförmig vom Rand 12 zu einem Rand 13 der Ausflussfläche 6. Die Fassung 14 ist U-förmig und hält den Filter 2 auch an einem Rand 13 der Ausflussfläche 6.

Die Dichtung 28 weist auf einer Einflussseite ein erstes Dichtungsprofil 8 auf und auf einer Ausflussseite ein zweites Dichtungsprofil 9.

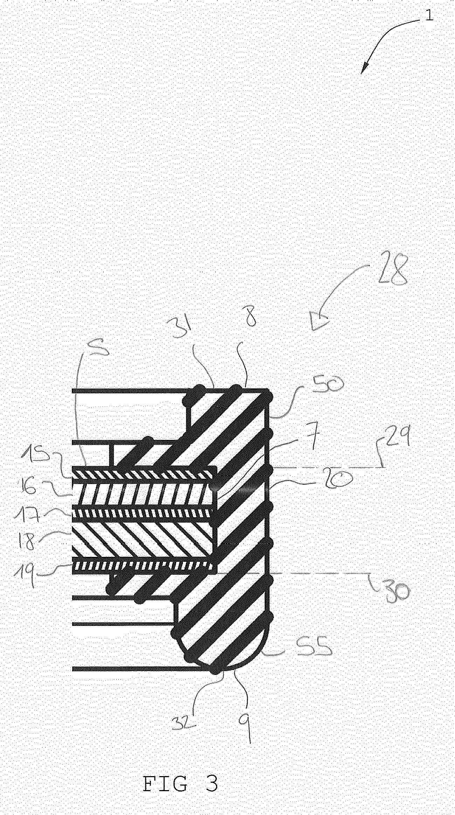

Die Dichtung 28 und die Dichtungsprofil werden im Detail in Figur 3 gezeigt. Das erste Dichtungsprofil 8 an der Einflussfläche 5 ist als Flachdichtungsprofil 50 ausgebildet. Daher weist das erste Dichtungsprofil an einem Eingangsende 31 der Dichtung 28 ein flaches Ende mit rechtwinkligen Ecken auf. Dabei erstreckt sich das erste Dichtungsprofil 8 bis zu der Einflussfläche 6 wie durch die gestrichelte Linie 29 dargestellt. Das zweite Dichtungsprofil 9 erstreckt sich von einem Ausflussende 32 der Dichtung 28 bis zu der Ausflussfläche 6, wie durch die gestrichelte Linie 30 dargestellt. Das zweite Dichtungsprofil 9 ist als halbes O-Ringprofil 55 ausgebildet.

Die Dichtung 28 weist einen Verbindungsteil 20 auf. Der Verbindungsteil 20 ist auf der Verbindungsfläche 7 angeordnet. Der Verbindungsteil 20 bedeckt die Verbindungsfläche 7 vollständig.

Die Dichtung 28 mit dem ersten Dichtungsprofil 8, dem Verbindungsteil 20 und den zweiten Dichtungsprofil 9 ist einstückig ausgebildet, sodass die Dichtung 28 sich über die ganze Verbindungsfläche 7 erstreckt. Dadurch ist die Verbindungsfläche 7 vollständig bedeckt und ein Fluid, das durch den Flachfilter 2 strömt, kann seitlich nicht austreten.

Die Dichtung 28 wird in einem Spritzgussverfahren hergestellt. Durch das Spritzgussverfahren tritt ein Teil des Materials der Dichtung 28 in Fugen zwischen den Schichten 15-19 des Filters 2 ein. Dadurch kann auch verhindert werden dass ein Fluid um einen Rand der Schichten 15-19 herumströmt und so von einzelnen Schichten 15-19 oder allen Schichten 15-19 nicht gefiltert wird.

Die Schichten 15-19 des Filters 2 sind in Figur 3 im Detail gezeigt. Der Filter 2 aus Figuren 1 bis 3 ist ein Wasserfilter zum Reinigen von Leitungswasser und wird typischerweise an das Ende eines Wasserhahnes montiert. Das Wasser strömt zunächst durch eine Vorfilterschicht 15, welche grobe Sedimente ausgefiltert.

Die Vorfilterschicht 15 weist eine Gitterstruktur auf. Anschliessend strömt das Wasser durch eine Aktivkohleschicht 16. Die Aktivkohleschicht 16 filtert organische Bestandteile im Wasser.

Anschliessend an die Aktivkohleschicht 16 ist eine Zwischenfilterschicht 17 angeordnet. Die Zwischenfilterschicht 17 filtert wie die Vorfilterschicht 15 ungelöste Sedimente aus und ist aus einem nicht gewebten Vlies (non-woven). Durch die Zwischenfilterschicht 17 werden sich lösende Partikel aus der Aktivkohleschicht 16 aufgefangen. Nach der Zwischenfilterschicht 17 strömt das Wasser durch eine Membran 18 für die Bakterienfiltration. Eine solche Membran 18 ist in der europäischen Patentanmeldung EP 2 476 724 A1 beschrieben. Als letztes strömt das Wasser durch eine Endfilterschicht 19. Die Endfilterschicht 19 weist wiederum eine Gitterstruktur auf um grobe Bestandteilen, die sich im Filter gelöst haben, aufzufangen.

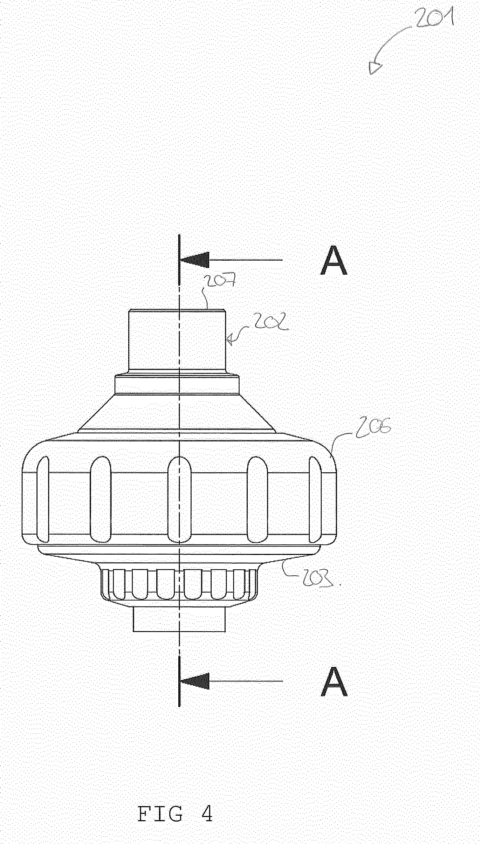

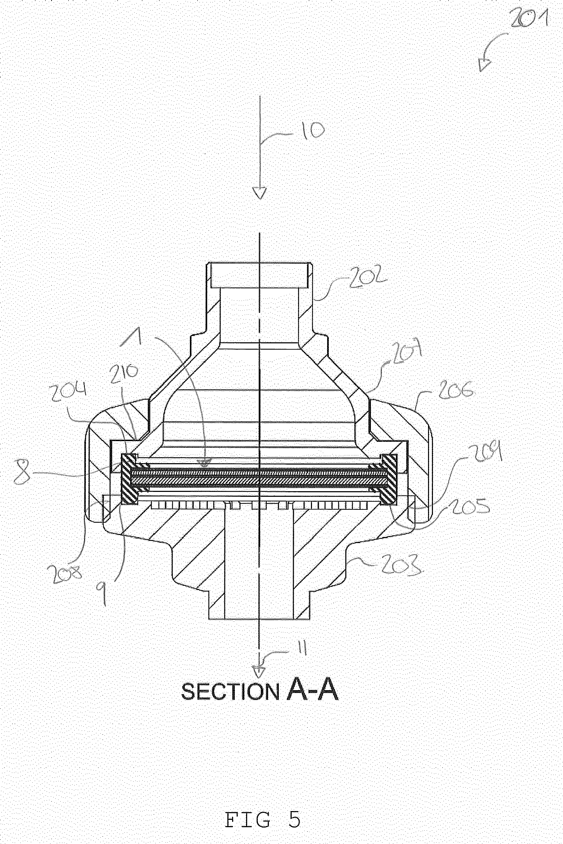

Figur 4 zeigt ein Filtersystem 201 zum Halten der Filtereinheit 1. Das Filtersystem weist eine Halterung mit einem Einflussteil 202 und einem Ausflussteil 203 auf. Das Einflussteil 202 enthält ein Einflussrohr 207 und einen Gewindering 206. Der Gewindering 206 wird auf das Einflussrohr 207 aufgesetzt und an einem Flansch 210 (siehe Figur 5) gehalten am Einflussrohr 207. Dabei ist der Gewindering 206 drehbar relativ zum Einflussrohr 207 und weist ein Innengewinde 208 auf (siehe Figur 5). Das Innengewinde greift in ein Aussengewinde 209 des Ausflussteiles 203 ein (siehe Figur 5).

Figur 5 zeigt einen Querschnitt entlang der Schnittfläche A-A aus Figur 4. Im Inneren der Halterung ist die Filtereinheit 1 aus den Figuren 1-3 an den Dichtungselementen 8 und 9 gehalten. Dabei wird zwischen der Filtereinheit 1 und dem Einflussteil 202 durch eine Einflussnut 204 abgedichtet. Das erste Dichtelement 3 befindet sich in der Einflussnut 204. Dabei ist die Einflussnut 204 komplementär zum Flachdichtungsprofil 50 des ersten Dichtelements geformt. Dadurch ist eine überlappende Dichtungsfläche an der die Flachdichtung 50 mit der Nut 204 möglichst gross. Im Gegensatz dazu ist das weist zweite Dichtungsprofil ein O-Ringprofil 55 auf.

Das zweite Dichtungsprofil 9 ist in einer Ausflussnut 205. Dabei sind zwischen dem zweiten Dichtungsprofil 9 und der Ausflussnut 205 Leerräume vorgesehen. Durch einen Fluiddruck in Richtung 10 wird die Flachdichtung in Einflussrichtung 10 gedrückt. Folglich ist ein Anpressdruck auf der Seite des Ausflusses wesentlich höher als auf der Seite des Einflusses und das zweite Dichtungsprofil 9 wird gegen die Ausflussnut 205 und in die Leerräume gedrückt.

Auf der Einflussseite wird eine Dichtwirkung durch die Anpressraft zwischen Gewindering 206 und Ausflussteil 204 erzeugt. Beim Festziehen des Gewinderinges wird der Einflussteil 202 mit der Nut 204 gegen das erste Dichtelement gepresst sodass eine Dichtwirkung erzielt wird. Da ein Wasserdruck das erste Dichtelement und das die Nut 204 auseinanderdrückt, wird der Anpressdruck am ersten Dichtprofil während des Betriebes reduziert. Folglich muss das Dichtprofil auch bei geringeren Drücken zuverlässig abdichten.

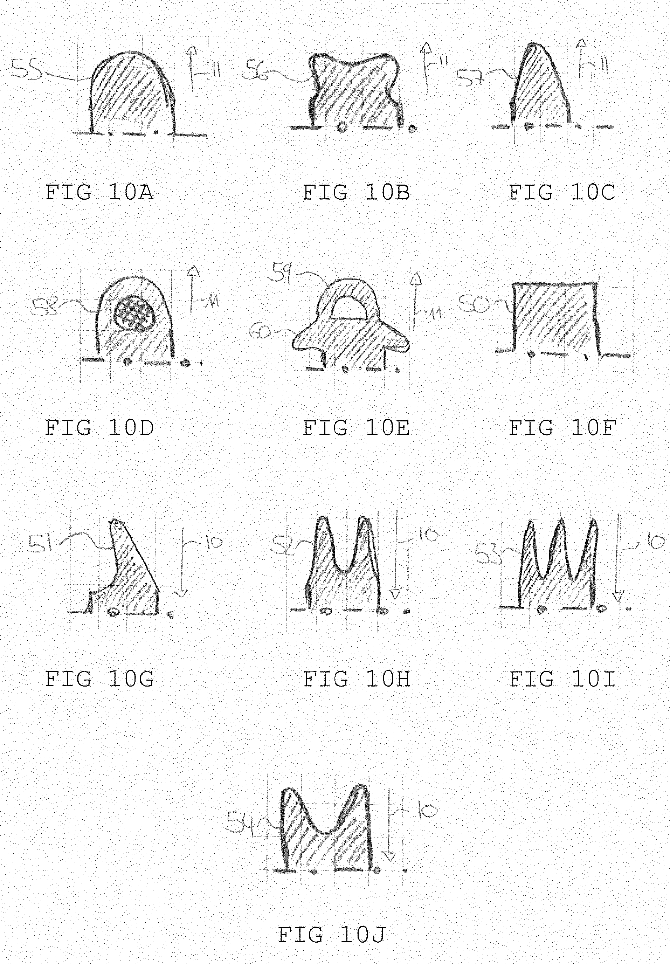

Figuren 10A bis 10J zeigen verschiedene Dichtprofile, die für das erste und/oder das zweite Dichtprofil geeignet sind. Figur 10A zeigt ein O-Ring Dichtprofil 55. Das O-Ring Dichtprofil 55 ist im Querschnitt halbkreisförmig. Figur 10B zeigt ein X-Ring Dichtprofil 56, welches im Querschnitt V-förmig ist. Figur 10C zeigt ein dornartiges Dichtprofil. In der Querschnittsansicht aus Figur 10C ist das dornartige Profil dreieckig mit einer mittigen abgerundeten Spitze. Figur 10D zeigt ein faserverstärktes O-Ring Dichtungsprofil 58, welches wie das O-Ring Dichtungsprofil 55 halbkreisförmig ist. Zudem weist das faserverstärkte O-Ring Dichtungsprofil 58 einen Kern auf, welcher härter oder weicher als das umliegende Material ist. In einer bevorzugten Variante ist das Material weicher, sodass der O-Ring sich leichter verformen lässt. Durch ein härteres Material könnte einer übermäßigen Verformung bei hohen Anpresskräften oder Anpressdrücken entgegengewirkt werden.

Figur 10E zeigt eine schlauchartige Dichtung 59 mit Schlauchnuten 60. Durch die Schlauchnuten 60 können die Ränder einer Nut wie die Nuten 204 und 205, in welche die schlauchartige Dichtung 59 eingreift, zusätzlich abgedichtet werden.

Die Dichtungsprofile 55-59 nehmen einen Anpressdruck auf und lassen sich in Flussrichtung 11 komprimieren, sodass eine Anpressfläche sich vergrössert. Daher sind die Profile 55-59 besonders für das zweite Dichtungsprofil geeignet.

Figur 10F zeigt das Flachdichtungsprofil 50, Figur 10G ein Lippendichtungsprofil 51, Figur 10H ein Doppellippendichtungsprofil 52, Figur 10I ein Labyrinthdichtungsprofil 53 und Figur 10J ein Deltadichtungsprofil 54. Wenn die Dichtungsprofile 51-54 durch einen Anpressdruck komprimiert werden, so biegen sich die länglichen Fortsätze der Dichtungen 51. Wenn ein Fluidfluss entlang der Einflussrichtung 10 die Dichtprofile 51-54 und die Nut 204 auseinander drückt, so biegen sich die Fortsätze zurück ohne an Dichtwirkung einzubüssen.

Zudem sind die Fortsätze biegbar quer zur Flussrichtung 10. Ein Fluid, welches quer zur Flussrichtung in die Nut 204 eindringt, drückt die Dichtungsprofile 51-54 gegen eine zum vorgesehenen Fluidfluss 10 äussere Seite der Nut 204. Dadurch entsteht eine zusätzliche Dichtungswirkung zwischen diesen Flächen.

Das Flachdichtungsprofil 50 ist komplementär zur Nut 204 geformt. In der Folge ist eine Dichtungsfläche zwischen Nut 204 und Profil 50 auch bei geringen Anpressdrücken hoch.

Bei qualitativen Versuchen mit einer Filtereinheit gemäss der Figuren 1 bis 3, wobei aber sowohl das erste Dichtungsprofil als auch das zweite Dichtungsprofil als O-Ring Profil 55 ausgestaltet war, zeigte sich, dass diese Dichtung nicht zuverlässig dichtete. Der Filter mit zwei symmetrischen Dichtungsseiten (beide O-Ring Dichtungsprofile 55) wurde in einem dreiteiligen Filtergehäuse (siehe Figuren 4 und 5) verschraubt. Danach wurde Leitungswasser mit Standard-Leitungsdruck durch den Filteraufbau gefiltert. Während dem Filtern tropfte Wasser aus der Gehäuseverschraubung und zeigte somit eine unsaubere Dichtung des Filters an. Der gleiche Versuch wurde mit einem anderen Filter wiederholt. Dieser Filter bestand aus den gleichen Filterelementen in der gleichen Anordnung, jedoch waren die beiden Dichtungsseiten nicht identisch (siehe Figuren 1 bis 3). Eine Einflussseite wies eine Flachdichtung auf, während eine Ausflussseite eine O-Ring Dichtung analog zum undichten Filter besass. Der Filter gemäss Figuren 1 bis 3 wurde ins gleiche Gehäuse (siehe Figuren 4 und 5) verschraubt und mit Leitungswasser getestet. Dabei war kein austropfendes Leitungswasser aus der Verschraubung mehr beobachtbar.

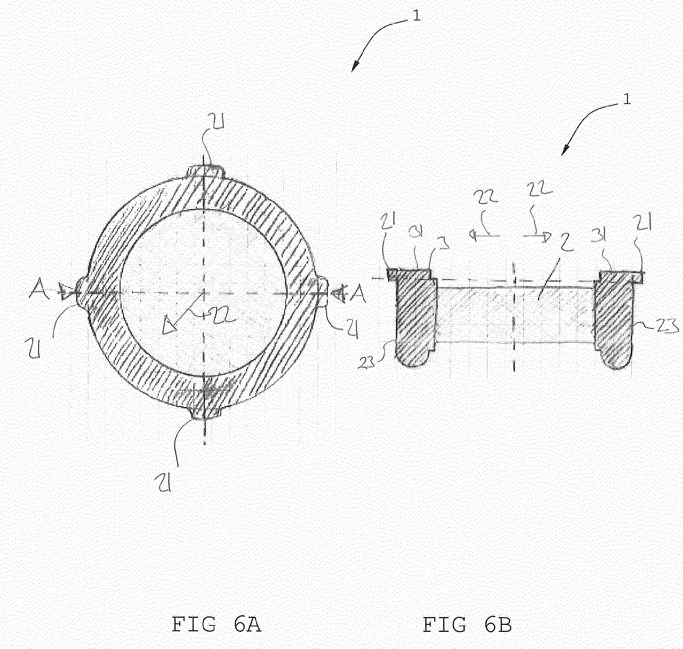

Figuren 6A und 6B zeigen eine Schlupfsicherung für das Filterelement 1. Figur 6A zeigte einen Querschnitt einer Draufsicht des Filterelementes 1. Figur 6B zeigt einen vereinfachten Querschnitt der Figur 2. Das Filterelement 1 ist im Wesentlichen identisch zu dem Filterelement 1 der Figuren 1 bis 3. Zusätzlich weist das Filterelement 1 eine Schlupfsicherung auf. Die Schlupfsicherung verhindert, dass das erste Dichtungselement 3 sich beim Festziehen des Gewinderinges 206 verdreht, da beim Festziehen das Einflussrohr 207 gegebenenfalls mitdrehen kann. Dafür weist das erste Dichtungselement 3 Nocken 21 auf. Die Nocken 21 greifen in entsprechende Ausnehmungen im Einflussteil 202 ein. Die gezeigte Schlupfsicherung weist vier Nocken 21 auf, welche gleichmässig in Umfangsrichtung verteilt sind. Wie in Figur 6B gezeigt erstrecken sich die Nocken an dem Einflussende 31 in einer radialen Richtung 22 von einer Mantelfläche 23 des Filterelementes 1.

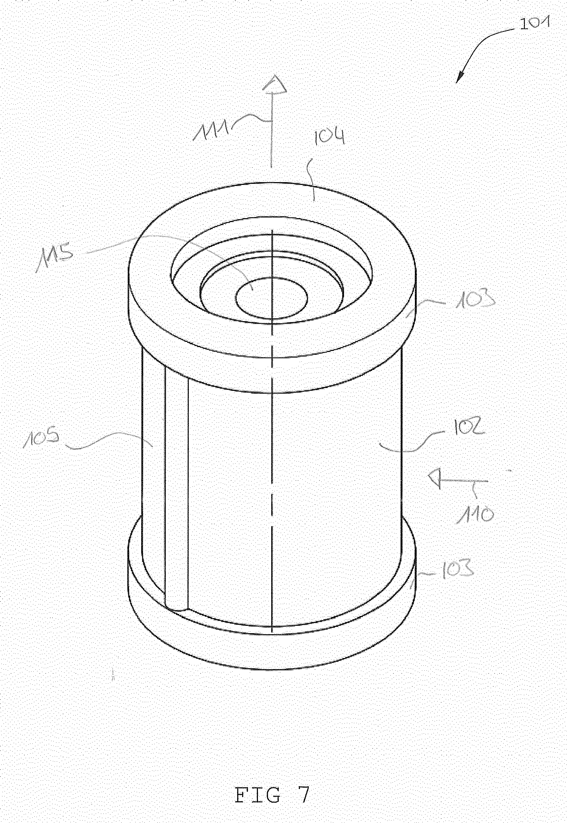

Figur 7 zeigt eine zweite Ausführungsform eines Filterelementes 101. Das Filterelement 101 ist als Zylinderfilter ausgebildet. Ein Fluss eines Fluides fliesst von aussen durch eine Einflussfläche 105 entlang einer Einflussrichtung 110 in das Innere des Filterelementes 101 und durch eine obere Öffnung 115 entlang einer Ausflussrichtung 111 aus dem Inneren des Zylinders heraus. Das Filterelement 101 weist einen Filter 102 auf. Der Filter 102 bildet ein Rohr. Ausserdem weist das Filterelement 101 ein erstes und ein zweites Dichtungselement 103, 104 auf. Das erste Dichtungselement ist zweiteilig um beide Seiten der des Einflusses abzudichten.

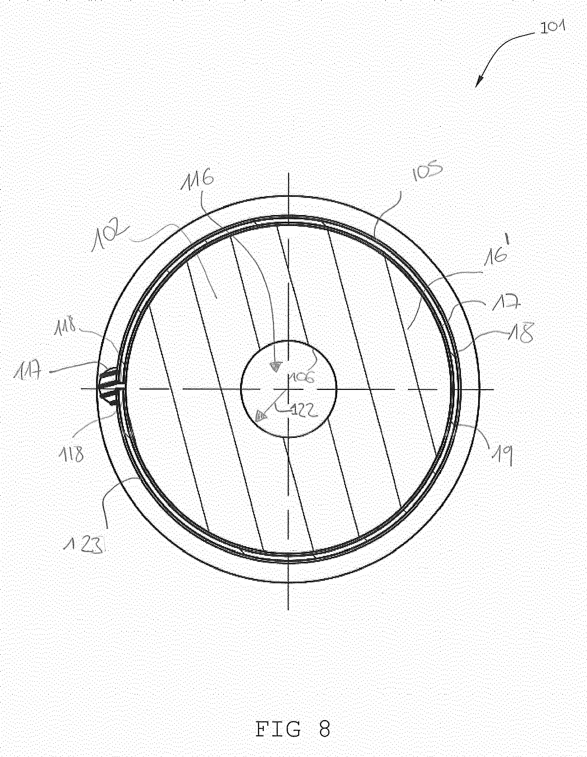

Figur 8 zeigt einen Querschnitt der Filtereinheit 101 senkrecht zur Ausflussrichtung 111. Eine radiale Richtung 122 ist durch einen Pfeil indiziert. Eine Ausflussfläche 106 liegt im radial Inneren des zylindrischen Filters. Das Fluid fliesst radial von aussen in den Zylinderfilter hinein, durch den Filter 102 und dann durch eine Leitung 116 zur oberen Öffnung 115.

Die Zylinderform wird hergestellt, indem zunächst äussere Schichten 17 -19 um einen hohlzylindrischen Körper 16' aus Aktivkohle gewickelt werden. Dann werden zwei gegenüberliegende parallele Kanten 118 der Schichten 17-19 an- oder aufeinander gelegt. Die Dichtungselemente 103, 104 werden im Spritzgussverfahren hergestellt, gemeinsam mit einem im Bereich der gegenüberliegenden Kanten 118 liegenden Wulst 117. Dieser Wulst 117 verhindert einen Fluss durch eine Schnittstelle zwischen den Kanten 118.

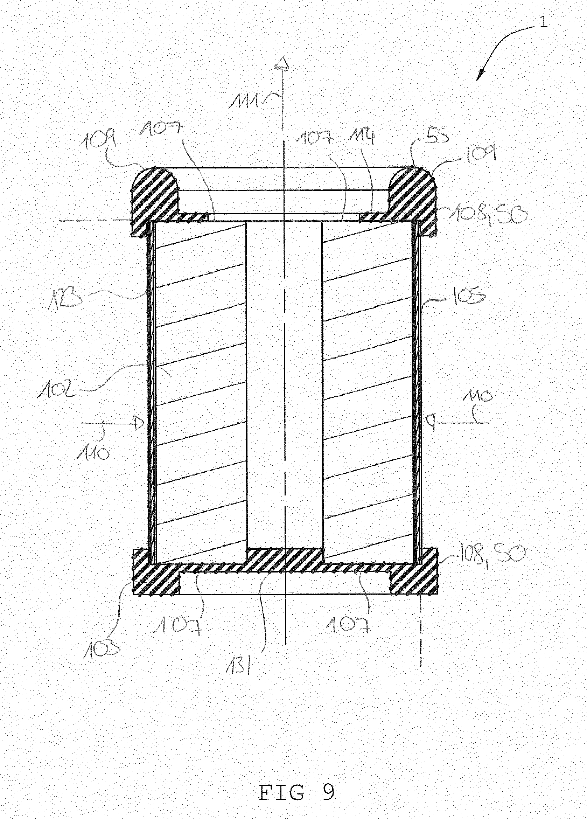

Für den Wulst 117 und die Dichtungselemente 103, 104 wird eine Form aus Halbschnitten hergestellt. Die Halbschnitte sind jeweils auf Verbindungsflächen 107 (siehe Figur 9), und einer Mantelfläche 123 angeordnet. Somit gibt es eine Totalzahl an sechs Teilen (also 3 Paare an Halbschnitten), welche ineinander gesteckt werden für die Herstellung einer Kapsel für das Spritzgussverfahren.

Der Filter weist die Aktivkohleschicht 16, die Zwischenfilterschicht 17, eine Membran für Bakterienfiltration 18 und eine Endfilterschicht 19 auf.

Figur 9 zeigt einen Querschnitt der Filtereinheit 101 parallel zur Ausflussrichtung 111. Fig. 9 zeigt das erste und zweite Dichtungsprofil 108, 109 im Detail. Beide Teile des ersten Dichtungsprofiles 108 sind im Wesentlichen als Flachdichtung 50 ausgestaltet. Das Dichtungsprofil erstreckt 50 dabei von der Einflussfläche 105 senkrecht zur Einflussfläche 105 entgegen der Einflussrichtung 110. Der Filter 102 weist die Mantelfläche 123 auf.

Wie in Figur 2 ist das zweite Dichtungsprofil 109 als O-Ring Profil 55 ausgestaltet. Anders als bei der Flachdichtung aus Figur 2 weist die Zylinderfiltereinheit 101 die zwei Verbindungsflächen 107 auf. Die Verbindungsflächen 107 sind an Stirnseiten des zylindrischen Filters 102 angeordnet und zumindest teilweise von den Dichtungselementen 103, 104 bedeckt. In bevorzugten Ausführungsformen sind die Verbindungsflächen 107 vollständig bedeckt. Bei der Zylinderfiltereinheit 101 ist das zweite Dichtelement 103 an einer der Verbindungsflächen 107 angeordnet und erstreckt sich von der Verbindungsfläche 107 in Ausflussrichtung 111.

An einem Ende 131, welches der Ausflussrichtung 111 entgegen liegt, dichtet das erste Dichtungselement 103 eine Unterseite des Zylinderfilters 102 vollständig ab.

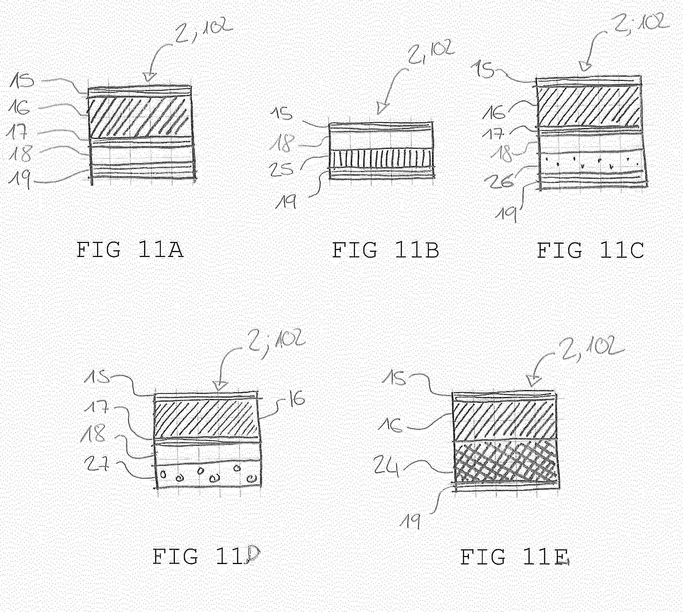

Figuren 11A bis 11F zeigen verschiedene Schichtanordnungen für die Filter 2, 102. Eine erste Anordnung ist in Figur 11A gezeigt und identisch zur in Fig. 3 gezeigten Schichtanordnung. In der ersten Ausführungsform weist der Filter fünf Schichten auf. Eine erste Schicht ist eine Vorfilterschicht 15, in der Sedimente ausgefiltert werden. Eine zweite Schicht ist eine Aktivkohleschicht 16 in der organische Bestandteile absorbiert werden. Eine dritte Schicht ist eine Zwischenfilterschicht 17, mit welcher verhindert wird, dass Bestandteile der Aktivkohleschicht 16 in einen Fluidstrom geraten. Eine vierte Schicht ist eine Membran 18 zur Bakterienfiltration. Anschließend an die Membran 18 ist noch eine Endfilterschicht 19 angeordnet, welche die Membran schützt. Die längs gestreiften Schichten sind gitternetzartig und filtern grobe ungelöste Bestandteile aus einem Fluidstrom heraus.

Figur 11B zeigt eine zweite Ausführungsform des Filters. Auch in der zweiten Ausführungsform weist der Filter eine Vorfiltersicht 15 und eine Endfilterschicht 19 auf. Ausserdem weist die zweite Ausführungsform als zweite Schicht die Membran 18 zur Bakterienfiltration auf. Als dritte Schicht weist die zweite Ausführungsform eine Virenfilterschicht 25 auf.

Figur 11C zeigt eine dritte Ausführungsform des Filters 2, 102. Die dritte Ausführungsform umfasst sechs Schichten. Wie die erste Ausführungsform weist die dritte Ausführungsform eine Vorfilterschicht 15, eine Zwischenfilterschicht 17 und eine Endfilterschicht 19 auf. Als zweite Schicht weist die dritte Ausführungsform eine Aktivkohleschicht 16 auf. Nach der Zwischenfilterschicht 17 ist die Membran 18 zur Bakterienfiltration angeordnet. Zwischen der Membran 18 und der Endfilterschicht 19 ist zusätzlich eine Aromaschicht 26 angeordnet. Die Aromaschicht 26 enthält eine Aroma abgegebene Komponente und kann damit einem Leitungswasser einen Geschmack geben.

Figur 11D zeigt eine vierte Ausführungsform eines Filters. Die ersten vier Schichten werden Ausführungsform sind identisch zur ersten Ausführungsform. Anstatt einer Endfilterschicht 19 weist die vierte Ausführungsform eine Ionentauscherschicht 27 auf. Dadurch können beispielsweise Kalzium Kationen aus dem Leitungswasser gebunden werden.

Figur 11E zeigt eine fünfte Ausführungsform eines Filters. Die fünfte Ausführungsform weist eine Vorfiltersicht 15 und eine Endfilterschicht 19 auf. Als zweite Schicht weist die Ausführungsform eine Aktivkohleschicht 16 auf. Die dritte Schicht ist eine Schwermetallfilterschicht 24. Die Schwermetallfilterschicht 24 kann radioaktive Substanzen und/oder Schwermetalle aus dem Fluid filtern.

Selbstverständlich können hier genannten Schichten untereinander sowie mit weiteren Schichten im Rahmen der Erfindung kombiniert werden.

## Patentansprüche

1. Filtereinheit (1; 101) für ein Fluid, bevorzugt eine Flüssigkeit,
- enthaltend einen Filter (2; 102) und mindestens zwei Dichtungselemente (3, 4; 103, 104)
- wobei der Filter (2; 102) eine Einflussfläche (5), eine Ausflussfläche (6) und zumindest eine Verbindungsfläche (7) aufweist, welche sich zwischen der Ein- und der Ausflussfläche (5, 6; 105, 106) erstreckt, **dadurch gekennzeichnet, dass**
- an der Einflussfläche (5; 105) das erste Dichtungselement (3) und an der Ausflussfläche (6; 106) oder der Verbindungsfläche (107) das zweite Dichtungselement (4; 104) angeordnet ist, wobei
- das erste Dichtungselement (3; 103) einen Rand (12) der Einflussfläche (5; 105) umschliesst, und das zweite Dichtungselement (4; 104) einen Rand (13) der Ausflussfläche (6; 106) oder der Verbindungsfläche (107) umschliesst, und wobei
- das erste Dichtungselement (3; 103) und das zweite Dichtungselement (4; 104) jeweils ein Dichtungsprofil (8, 9; 108, 109) aufweisen und das zweite Dichtungsprofil (9; 109) sich vom ersten Dichtungsprofil (8; 108) unterscheidet.

2. Filtereinheit (1; 101) gemäss Anspruch 1, **dadurch gekennzeichnet, dass** das erste Dichtungsprofil (8; 108) so geformt ist, dass ein lateraler Druck des Fluides das erste Dichtungsprofil (8; 108) gegen eine Anschlagfläche drückt, welche zu einer Einflussrichtung (10; 110) des Fluides parallel ist.

3. Filtereinheit (1; 101) gemäss einem der vorherigen Ansprüche, **dadurch gekennzeichnet, dass** das zweite Dichtungsprofil (9; 109) zumindest eine Auswölbung aufweist und das erste Dichtungsprofil (8; 108) im Wesentlichen flach ausgebildet ist.

4. Filtereinheit (1; 101) gemäss einem der vorherigen Ansprüche, **dadurch gekennzeichnet, dass** der Filter ein Mehrschichtfilter ist, und bevorzugt der Filter zwei, drei, vier, fünf, sechs oder mehr Schichten (15-19) aufweist.

5. Filtereinheit (1; 101) gemäss Anspruch 4, **dadurch gekennzeichnet, dass** die Schichten des Filters durch die Dichtungselemente (3, 4; 103, 104) und/oder über die Verbindungsfläche (7; 107) miteinander verbunden sind und bevorzugt jede Schicht durch zumindest eines der Dichtungselemente (3, 4; 103, 104) gegen jeweils benachbarte Schichten abgedichtet ist.

6. Filtereinheit (1; 101) gemäss einem der vorherigen Ansprüche, **dadurch gekennzeichnet, dass** der Filter ein Flachfilter (2) oder ein Zylinderfilter (102) oder ein Spiralwickelfilter ist.

7. Filtereinheit (1; 101) gemäss einem der vorherigen Ansprüche, **dadurch gekennzeichnet, dass** die Dichtungselemente (3, 4; 103, 104) die Verbindungsfläche (7; 107) des Filters zumindest teilweise, bevorzugt vollständig, bedecken.

8. Filtereinheit (1; 101) gemäss Anspruch 7, **dadurch gekennzeichnet, dass** das erste und das zweite Dichtungselement (3, 4; 103, 104) jeweils oder gemeinsam einstückig ausgebildet sind.

9. Filtereinheit (1; 101) gemäss einem der vorherigen Ansprüche, **dadurch gekennzeichnet, dass** die Dichtungselemente (3, 4; 103, 104) ein Elastomer enthalten oder aus einem Elastomer bestehen, bevorzugt aus einem lebensmittelverträglichen Elastomer.

10. Filtereinheit (1; 101) gemäss einem der vorherigen Ansprüche, **dadurch gekennzeichnet, dass** zumindest eines, bevorzugt zumindest das erste und das zweite, der Dichtungselemente durch ein Spritzgussverfahren hergestellt ist.

11. Filtereinheit (1; 101) gemäss einem der vorherigen Ansprüche, **dadurch gekennzeichnet, dass** das Elastomer eine Shorehärte A von 20 bis 90, bevorzugt 30 bis 80, besonders bevorzugt 35 bis 70, aufweist.

12. Filtereinheit (1; 101) gemäss einem der vorherigen Ansprüche, **dadurch gekennzeichnet, dass** am ersten und/oder am zweiten Dichtungselement (3, 4; 103, 104) und/oder an einer Mantelfläche (123) und/oder der Verbindungsfläche (7; 107) eine oder mehrere, bevorzugt radiale, Ausnehmungen oder Nocken (21) angeordnet sind.

13. Filtersystem enthaltend eine Filtereinheit (1; 101) gemäss einem der vorherigen Ansprüche und eine Haltevorrichtung für das Filtersystem,
- wobei die Haltevorrichtung einen Einflussteil (202) und einen Ausflussteil (203) umfasst und
- der Einflussteil (202) und/oder der Ausflussteil (203) zumindest eine zur vorgesehenen Einflussrichtung senkrecht oder parallel verlaufende Fläche aufweist, welche eine insbesondere umlaufende Einflussnut (204) für das erste Dichtungsprofil (8; 108) umfasst, wobei die Einflussnut (204) bevorzugt formkomplementär zum ersten Dichtprofil (8; 108) ausgebildet ist,
- der Ausflussteil (203) eine zur vorgesehenen Ausflussrichtung senkrecht verlaufende Fläche aufweist, welche eine insbesondere umlaufende Ausflussnut (205) für das zweite Dichtungsprofil 1 (9; 109) umfasst und
- der Einflussteil (202) und der Ausflussteil (203) über eine lösbare mechanische Verbindung, bevorzugt ein Gewinde (208, 209) oder einen Bajonettverschluss verbindbar sind, sodass zumindest eines der Dichtungselemente (3, 4; 103, 104) von den Nuten (204, 205) axial vorgepresst wird.

14. Filtersystem gemäss Anspruch 12 und Anspruch 13, **dadurch gekennzeichnet, dass** das Einflussteil (202) und/oder Ausflussteil (203) eine oder mehrere, bevorzugt radiale, Ausnehmungen oder Nocken für entsprechende Ausnehmungen oder Nocken der Filtereinheit (1; 101) umfasst.

15. Verfahren zum Herstellen einer Filtereinheit, bevorzugt einer Filtereinheit (1; 101) nach einem der vorherigen Ansprüche, enthaltend die Schritte:
- Bereitstellen eines Filters (2; 102), bevorzugt eines Mehrschichtfilters, mit einer Einflussfläche (5; 105), einer Ausflussfläche (6; 106) und zumindest einer Verbindungsfläche, welche sich zwischen Ein- und Ausflussfläche (5, 6; 105, 106) erstreckt,
- Giessen, bevorzugt spritzgiessen, einer Dichtung um die Verbindungsfläche des Filters, wobei die Dichtung an der Einflussfläche (5; 105) ein erstes Dichtungselement (3; 103) mit einem ersten Dichtungsprofil (8; 108) und an der Ausflussfläche (6; 106) ein zweites Dichtungselement (4; 104) mit einem zweiten Dichtungsprofil (9; 109) aufweist, wobei das zweite Dichtungsprofil (9; 109) vom ersten Dichtungsprofil (8; 108) verschieden ist.
